# EUROPEAN PATENT SPECIFICATION

(11) **EP 1 044 719 B1**
(45) Date of publication and mention of the grant of the patent: **31.12.2008**
(21) Application number: 98937795.7
(22) Date of filing: 12.08.1998
(51) Int. Cl.: B01D 69/10, B01D 71/48, D21H 13/24, D04H 1/54

(54) **SUPPORT FOR SEMIPERMEABLE MEMBRANE**
TRÄGER FÜR HALBDURCHLÄSSIGE MEMBRAN
SUPPORT POUR MEMBRANE SEMI-PERMEABLE

(43) Date of publication of application: 18.10.2000
(73) Proprietor: Miki Tokushu Paper Mfg. Co., Ltd., Kawanoe-shi, Ehime 799-0101 (JP)
(72) Inventor: MIKI, Teruhisa, Miki Tokushu Paper Mfg. Co., Ltd., Kawanoe-shi, Ehime 799-0101 (JP); SHINOKI, Takanori, Shinseiwa Shinosaka Bldg., Osaka-shi Osaka 533-0033 (JP); KOUZU, Naoya, Miki Tokushu Paper Mfg. Co., Ltd., Kawanoe-shi, Ehime 799-0101 (JP); MIYAGI, Akio, Miki Tokushu Paper Mfg. Co., Ltd., Kawanoe-shi, Ehime 799-0101 (JP)
(74) Representative: Vossius & Partner
(86) International application number: PCT/JP1998/003594
(87) International publication number: WO 2000/009246

(56) References cited:
- EP-A- 0 177 167
- EP-A- 0 645 487
- JP-A- 2 269 034
- JP-A- 10 174 849
- US-A- 4 795 559
- US-A- 5 275 725

## Description

The present invention relates to a support member for a semipermeable membrane, a process for preparing said support member, and a semipermeable membrane having said support member.

The semipermeable membrane has widely been used in many fields such as a change of seawater to freshwater, a treatment of waste water, a concentration of foods, a separation of microorganisms (e.g., bacterium, yeasts, viruses and the like) and a filtration of blood for a medical treatment, as well as a preparation of ultrapure water for washing a semiconductor.

In general, the semipermeable membrane is formed from a synthetic polymer. Because of low mechanical strength of the membrane itself, the semipermeable membrane has been produced by casting a film-forming solution comprising the synthetic polymer on a fabric substrate as the support member (e.g., nonwoven fabric, woven fabric and the like) to produce the membrane.

Among the semipermeable membranes, there is an instance where a semipermeable membrane used for an ultraprecision filtration such as in particular ultrafiltration, reverse osmosis and the like may be subjected to high pressure near 100 atmospheric pressure. In such a case, a high strength and a dimensional stability are required of the support member which reinforces the membrane, said high strength bringing about no breaking of the support member at the high pressure, and said dimensional stability causing no elongation of the support member. Although a method of increasing a basis weight of the support member has generally been employed in the past in order to cope with said requirements, there are problems such as an increase of cost, a decrease of filtration efficiency and the like.

Although it may be reasonable to increase a pore size of the membrane and the support member in order to improve a filtration rate by means of the semipermeable membrane, only the pore size of the support member is generally variable because the pore size and a thickness of the membrane are inevitably determined in many cases according to the requirements for purposes and using embodiments of the semipermeable membranes. However, in the case where the pore size of the support member becomes large, there is a drawback that a strike-through occurs when the film-forming solution comprising the polymer is casted on the support member, and the films are simultaneously formed on the obverse and reverse of the support member in the next solidifying process to produce the membrane having defects such as pinhole and the like. On the other hand, in the case where the pore size of the support member becomes small, the filtration rate of the semipermeable membrane is lowered, and an exfoliation of the membrane from the support member and the breakage of the membrane are easy to occur because an adhesion between the membrane and the support member becomes insufficient as the film-forming solution does not sufficiently permeate into the support member at the time of forming the semipermeable membrane, and a durability against an application of pressure at the time of filtration and a negative pressure at the time of washing.

In addition, in the case where the surface of the support member is ununiform, the membrane having an irregular surface is formed owing to the ununiformity of the surface of the support member because the semipermeable membrane itself is extremely thin film in general, and the problems, such as a decrease of an effective filtering area, an accumulation of contaminants in the concave parts of the membrane and the like are brought about because said irregular surface gives many opportunities wherein a liquid to be filtered is concentrated in the concave parts.

Accordingly, several propositions have heretofore been made in order to solve the aforementioned problems concerning the semipermeable membrane. For example, a support member for the semipermeable membrane is known wherein an adhesion between the membrane and the support member is improved by an anchoring effect of the membrane components in the through-type pores or concave cavities that are formed on the surface of the support member on which the membrane is formed by winding the support member for the semipermeable membrane by means of a guide roll having projections on the surface thereof (Japanese Patent Publication No. 15705/1986). However, in the case of this support member for the semipermeable membrane, an adhesion strength of the membrane to the support member is not so high because the anchoring effect of the membrane in the aforesaid cavities or through-type pores formed on the support member are insufficient. Furthermore, the aforementioned decrease of the effective filtering area, the accumulation of contaminants in the concave parts of the membrane and the like owing to the concentration of the liquid to be filtered in the concave parts are easy to occur because the concave parts are also formed on the membrane itself, which is produced on the surface of the support member, by forming the cavities on the surface of the support member on which the membrane is produced or by forming the pores through the support member. In addition, in the case of the support member through which the pores are formed, there are problems, such as an occurrence of pinholes caused by the break-through of the film-forming solution and the like.

As another prior art, a support member for the semipermeable membrane has been proposed wherein the support member is formed from a nonwoven fabric having double-layer structure which comprises a low-density dry web layer having an air permeability of less than 5-50 cc/cm²·s and a high-density wet web layer having an air permeability of from more than 0.1 cc/cm²·s to less than 5 cc/cm²·s, the objects of said prior art being an improvement of an adhesion of the membrane to the support member, a prevention of an occurrence of pinholes caused by a break-through of the film-forming solution and the like an improvement of mechanical properties and the like (Japanese Patent Publication No. 35009/1993). However, it is difficult to prepare the membrane having a smooth surface and to ensure wide effective filtering area by means of said support member for the semipermeable membrane.

As other prior art, a support member for a separating membrane has been proposed wherein said support member has a double structure which comprises an observe layer made of thick fibre having high surface roughness and the reverse layer made of thin fibre having a fine structure (Japanese Patent Publication No. 21526/1992). However, according to said prior art, the obverse of the separating membrane is rough, and an adhesion to a resin of the separating membrane as well as a filtering rate are easy to decrease because the reverse is too fine.

Furthermore, a process for preparing a semipermeable membrane which comprises subjecting a base material of polyester nonwoven fabric for a support member to a corona discharge treatment, sprinkling water on said nonwoven fabric, casting a solution of polysulfone and the like for a porous support member on said nonwoven fabric within 5-10 seconds to produce a film of supporting layer, and then forming a polyamide thin film on said film, the object of said process being an improvement of mechanical strength and water permeability of the semipermeable membrane (Japanese Patent Publication No. 25539/1996). However, this method has a drawback that the process are complicated because it is necessary to employ multi-stage treatment in order to prepare the support member for the semipermeable membrane, said multi-stage treatment consisting of the corona discharge treatment, the sprinkle of water and the formation of the porous support layer.

Therefore, the object of the present invention is to provide a support member for the semipermeable membrane having high quality which has an excellent adhesion to the semipermeable membrane such that the exfoliation of the semipermeable membrane from the support member and the breakage of said membrane are not brought about, and which does not cause the exfoliation and breakage of the membrane when it is used in the filtration under high pressure because of its excellent dimensional stability, and which can stably support the membrane when the filtration rate is high, and which produces the uniform and smooth membrane because of its excellent surface smoothness, and which can produce the membrane having no pinhole without causing the break-through of the film-forming solution.

Another object of the present invention is to provide a process for preparing the support member for the semipermeable membrane having the aforesaid characteristics, and the semipermeable membrane having said support member.

The present invention relates to a support member for a semipermeable membrane,
said support member being composed of a nonwoven fabric comprising 30-70% by weight of a polyester fiber having a double refraction (Δn) of 0.170 or more, a heat shrinkage stress at 200°C of 0.10-0.60 g/d and a mean single fiber fineness of 0.11-0.72 g/km (1.0-6.5 denier), and 70-30% by weight of a heat weldable binder fiber; and
said nonwoven fabric constituting the support member having a mean value of the breaking lengths at elongation of 5% in a lengthwise direction (MD) and a crosswise direction (CD) of 4.0 km or more and an air permeability of 0.2-5.0 cc/cm²·s.

Furthermore, the present invention provides a process for preparing a support member for a semipermeable membrane as defined above, which comprises (i) forming a monolayered paper web by making a paper from the material comprising the polyester fiber having a double refraction (Δn) of 0.170 or more and a heat shrinkage stress (200°C) of 0.10-0.60 g/d and a mean single fiber fineness of 0.11-0.72 g/km (1.0-6.5 denier) together with a heat weldable binder fiber in a weight ratio of 70:30-30:70, and (ii) subjecting the monolayered paper web or a laminated web comprising at least the monolayered paper web to a heat treatment under pressure to bind the fibers to each other or (iii) subjecting the monolayered paper web to a heat treatment under pressure to bind the fibers to each other, and laminating the monolayered paper web or other fibrous web on the heat-treated monolayered paper web and then subjecting the laminated webs to a heat treatment under pressure to bind them in a body.

Although the nonwoven fabric used in the present invention is particularly suitable for the support member for the semipermeable membrane, it is not intended that said fabric must be employed in only such use, and said fabric can suitably be employed for other uses.

In addition, the present invention includes a semipermeable membrane equipped with the above support member having the semipermeable membrane on one side of the aforesaid support member for the semipermeable membrane.

As described above, the support member for the semipermeable membrane according to the present invention comprises the nonwoven fabric having the mean value of the breaking lengths at elongation of 5 % in lengthwise direction (MD) and crosswise direction (CD) of more than 4.0 km and the air permeability of 0.2-5.0 cc/cm²·s.

In developing the support member for the semipermeable membrane, the present inventors have found that the stress at elongation of few percent (i.e. 5 %) is a more important factor than the stress at elongation at breakage for the dimensional stability of the support member for the semipermeable membrane. In particular, the factor that the mean value of the breaking lengths at elongation of 5 % in lengthwise direction (MD) and crosswise direction (CD) of the nonwoven fabric constituting the support member for the semipermeable membrane [hereinafter referred to the mean breaking length (at elongation of 5 %)] is 4.0 km or more is extremely important from the viewpoint of the dimensional stability of said support member.

For this reason, 4.0 km or more of the mean breaking length (at elongation of 5 %) is necessary to the support member for the semipermeable membrane according to the present invention. When the mean breaking length (at elongation of 5 %) of the support member for the semipermeable membrane is less than 4.0 km, the dimensional stability is decreased, and the support member is easy to elongate under the pressure applied to the semipermeable membrane at the time of filtration and the negative pressure at the time of washing the semipermeable membrane, and a decrease of the filtering function and the like are brought about by an enlargement and a deformation of pore size of the semipermeable membrane and the like. From the viewpoint of the dimensional stability, supportability of the membrane, filtering property of the semipermeable membrane and the like, it is desirable to adopt more than 4.3 km, more preferably, more than 5.0 km of the mean breaking length (at elongation of 5 %) in the support member for the semipermeable membrane according to the present invention.

In the present specification, "the breaking length" means the value determined according to JIS P 8113(1976), said value being an indication showing an anti-tension of the nonwoven fabric itself which is not influenced by the basis weight and width of the sample of the nonwoven fabric. Therefore, "the mean breaking length (at elongation of 5 %)" of the nonwoven fabric used in the support member for the semipermeable membrane is determined by the method described in detail in the following examples.

In the case of the former nonwoven fabrics comprising mainly of polyester fibre for clothing and industrial materials, said nonwoven fabrics have usually less than 3.8 km of the mean breaking length (at elongation of 5 %) which was determined by the method described in the present specification. Therefore, the nonwoven fabric constituting the support member for the semipermeable membrane according to the present invention is characterized by the high mean breaking length (at elongation of 5%) which has not generally be adopted in the formerly used nonwoven fabrics.

Furthermore, in the case of the support member for the semipermeable membrane according to the present invention, it is necessary to define the air permeability of said support member within the range of 0.2-5.0 cc/cm²·s, and it is desirable to adopt the range of 1.0-5.0 cc/cm²·s, more preferably 1.5-5 cc/cm²·s. When the air permeability of the nonwoven fabric constituting the support member for the semipermeable membrane is less than 0.2 cc/cm²·s, the film-forming solution does not sufficiently permeate into the nonwoven fabric, and the membrane does not strongly adhere to the nonwoven fabric even if the concentration and viscosity of said solution are low. On the other hand, when the air permeability of the nonwoven fabric exceeds 10.0 cc/cm²·s, the film-forming solution is apt to permeate to the inside of the nonwoven fabric (strike-through is apt to occur) and, at the same time, pinholes are apt to occur in the film structure owing to an entrainment of the air existing within the voids of the nonwoven fabric even if the concentration and viscosity of said solution are high. An occurrence of the pinholes lowers a separability and durability of the semipermeable membrane.

The term of the air permeability of the nonwoven fabric used in the present specification means the value measured according to JIS L 1079 (1966). It will be described in detail in the after mentioned examples.

The support member for the semipermeable membrane according to the present invention is not restricted in particular by the kinds of fibers which constitute the nonwoven fabric and the preparation methods of the nonwoven fabric insofar as said support member is constituted by the nonwoven fabric having the mean breaking length (at elongation of 5 %) of 4.0 km or more and the air permeability of 0.2-5.0 cc/cm²·s.

As a main fiber constituting a basic backbone of the nonwoven fabric which is used for preparing the support member for the semipermeable membrane, the polyester fiber is preferred which has double refraction (Δn) of 0.170 or more and heat shrinkage stress at 200°C [hereinafter referred to heat shrinkage stress (200°C)] of 0.10-0.60 g/d (gram/denier). The objective nonwoven fabric can smoothly be obtained by employing such a polyester fiber, said nonwoven fabric having the mean breaking length (at elongation of 5 %) of 4.0 km or more and the air permeability of 0.2-5.0 cc/cm²·s.

The term of the double refraction (Δn) used in the present specification means, as described in the aftermentioned examples, the value determined in α-bromonaphthalene by means of the polarization microscope equipped with a sodium light source and a Berek compensator which is inserted in a light path of the microscope.

The nonwoven fabric having the mean breaking length (at elongation of 5 %) of 4.0 km or more becomes hard to obtain when the double refraction (Δn) of the polyester fiber is less than 0.170 and/or the heat shrinkage stress (200°C) of the polyester fiber is less than 0.10 g/d. When the heat shrinkage stress (200'C) of the polyester resin exceeds 0.60 g/d, the shrinkage of the web becomes large and the formation is apt to lower (a cutting of the web and the like may occur in the extreme case) at the time of wetly making a fabric and at the next treatment under pressure during the process for manufacturing the nonwoven fabric.

Polyester fibers used for garments in general have the double refraction (Δn) of less than 0.170 and the heat shrinkage stress (200°C) of less than 0.08 g/d, and the nonwoven fabric manufactured from said polyester fibers has a low elasticity modulus.

In the case of industrial materials, such as sewing yarns, roofing materials, rope and the like which require a high tenacity, although the polyester fibers for said industrial material have been known which have the double refraction (Δn) of more than 0.170, the heat shrinkage stress (200°C) of said polyester fibers is less than 0.10 g/d, and the nonwoven fabric manufactured from said polyester fibers is unsuitable for producing the support member for the semipermeable membrane because said nonwoven fabric has a low elasticity modulus and the mean breaking length (at elongation of 5 %) of less than 4.00 km. In addition, although some of the polyester fibers used for the special fishing nets, such as longlines, sailcloths and the like have the heat shrinkage stress (200°C) of more than 0.10 g/d, they are unsuitable for producing the nonwoven fabric of the support member for the semipermeable membrane because their double refraction (Δn) is extremely lower than 0.170

Therefore, the polyester fibers, which are used as the main fiber of the nonwoven fabric for producing the support member for the semipermeable membrane according to the present invention, are greatly different from the polyester fibers which have generally been used heretofore.

Any of the polyester fibers may preferably be used as the main fiber of the nonwoven fabric for producing the support member for the semipermeable membrane insofar as they have the double refraction (Δn) of 0.170 or more and the heat shrinkage stress (200°C) of 0.10-0.60 g/d. Among others, these polyester fibers can smoothly be obtained by using poly(alkylene arylate) which comprises mainly of aliphatic diol unit and aromatic dicarboxylic acid unit.

As the poly(alkylene arylate) fiber, the fiber manufactured from poly(alkylene arylate) may preferably be used, said poly(alkylene arylate) comprising mainly of diol unit which comprises ethylene glycol unit and/or 1,4-butanediol and dicarboxylic acid unit which comprises terephthalic acid unit and/or naphthalene dicarboxylic acid unit. As the concrete examples, polyethylene terephthalate fiber, polyethylene naphthalate fiber, polybutylene terephthalate fiber and polybutylene naphthalate fiber can be mentioned. These poly(alkylene arylate) fibers may independently be used or may be used as a mixture of two or more of these fibers. These poly(alkylene arylate) fibers may have about 20 mole % or less of a structural unit derived from other copolymerizable components insofar as they satisfy the aforementioned physical properties.

The polyester fibers which are main fibers of the nonwoven fabric for producing the support member for the semipermeable membrane (said fibers may hereinafter be referred to the fibers mainly composed of polyester) may desirably have mean single fiber fineness of 0.11-0.72 g/km (1.0-6.5 denier), more preferably 0.13-0.67 g/km (1.2-6.0 denier). In the case where the polyester fibers having the aforementioned mean single fiber fineness are used, the nonwoven fabric having a sufficient strength, the aforesaid air permeability (0.2-5.0 cc/cm²·s) and an excellent surface smoothness can smoothly be obtained because the polyester fibers have comparatively fine denier.

On the other hand, in the case where the fibers mainly composed of polyester have mean single fiber fineness of less than 1.0 denier, the air permeability is apt to lower to less than 0.2 cc/cm²·s when the nonwoven fabric having high elasticity modulus is desired. In the case where said fibers have mean single fiber fineness of more than 8.0 denier, the nonwoven fabric obtained has the air permeability of more than 10 cc/cm²·s and comparatively large voids. In both cases, it becomes difficult to form the semipermeable membrane having an excellent filtering function on the support member.

The factor that the fibers mainly composed of polyester have a fiber length (cut length) of 3-20 mm is preferable from the viewpoint of strength of the nonwoven fabric for producing the support member for the semipermeable membrane, dispersibility of the fibers in the stock solution used for masking a paper, formation of the nonwoven fabric obtained and the like.

Section shapes of the fibers mainly composed of polyester may be circular or odd-shaped. In the case of the fiber whose section is odd-shaped, optional section shapes may be employed (e.g., ellipse, triangle, square, pentagon, higher polygon, T shape, cross shape, multifoil, flat, dog bone and the like).

Furthermore, the fibers mainly composed of polyester may be conjugate fibers, such as core/sheath type, sea/island type, side-by-side type and the like insofar as they do not deteriorate their characteristics.

In addition, as occasion demands, the fibers mainly composed of polyester may comprise one or more of additives, such as other polymers (e.g., polyolefin, polycarbonate, polyamide, polyphenylene sulfide, polyether ketone, fluorine resin and the like), titanium oxide, kaolin, silica, barium sulfate, carbon black, pigment, antioxidant, ultraviolet absorber, light stabilizer and the like insofar as amounts of the additives do not deteriorate the aforesaid characteristics of said fibers.

The nonwoven fabric for producing the support member for the semipermeable membrane according to the present invention, wherein a basis weight is low, a large number of extremely fine voids is uniformly distributed over the whole nonwoven fabric, an adhesion to the semipermeable membrane is extremely high and wherein said fabric has an excellent surface smoothness, a mean breaking length (at elongation of 5 %) of 4.0 km or more and an air permeability of 0.2-5.0 cc/cm²·s, can smoothly be obtained by manufacturing the nonwoven fabric from polyester fibers having a double refraction (Δn) of 0.170 or more and a heat shrinkage stress (200°C) of 0.10-0.60 g/d, said fibers being a main fiber, particularly the polyester fibers, among others poly(alkylene arylate) fibers, having these characteristics as well as a mean single fiber fineness of 1.0-6.5 denier. The semipermeable membrane having large filtering area can be formed on such a support member.

Although the preparation method of the fibers mainly composed of polyester which are the materials of the nonwoven fabric for producing the support member for the semipermeable membrane is not in any way restricted, said fibers can be prepared by, for example, the following process:
(i) polyester, preferably aforementioned poly(alkylene arylate), having an intrinsic viscosity of 0.5-0.8 dl/g is subjected to the melt spinning treatment;
(ii) the spun fiber is drawn in a warm water bath;
(iii) the drawn fiber is subjected to a stretching heat treatment and/or a relaxing heat treatment; and
(iv) the heat-treated fiber is cut to the fibers having the prescribed length.

The melt spinning condition, the drawing condition (draw ratio, drawing temperature and the like), the heat treatment condition (heat-treating temperature, heat-treating time, tension at the time of heat treatment and the like), the wind-up condition and the like may suitably be selected depending on a kind and an intrinsic viscosity of the polyester used and the like.

For example, although the preparation method of polyethylene terephthalate fiber used in the present invention is not in any way restricted, it can be prepared by the following process:
(i) polyethylene terephthalate is subjected to the melt spinning treatment under the condition that the spinning temperature is 275-300°C and the haul-off speed is 500-1000 m/min;
(ii) the spun fiber is subjected to the drawing treatment under the condition that the drawing temperature is 70-85°C and the draw ratio is 4.8-5.5;
(iii) the drawn fiber is subjected to the stretching heat treatment under the condition that the heating temperature is 140-210°C and the stretching degree is 0.99-1.01; and
(iv) the heat-treated fiber is subjected to the relaxing heat treatment at 60-140°C (e.g., a tow stood in a vertical state on a free belt made of metallic net is slowly transferred in a hot-air dryer).

In addition, polybutylene naphthalate fiber used in the present invention can be prepared by the following process:
(i) polybutylene naphthalate is subjected to the melt spinning treatment under the condition that the spinning temperature is 270-295°C and the haul-off speed is 500-1000 m/min;
(ii) the spun fiber is subjected to the drawing treatment under the condition that the drawing temperature is 70-85°C and the draw ratio is 4.8-5.5; and
(iii) the drawn fiber is subjected to the stretching and relaxing heat treatments under the same conditions as those employed in the case of polyethylene terephthalate fiber.

In the case of the aforementioned preparation methods, the drawing treatment may be carried out in one-stage or two-stage. When said treatment is conducted in two-stage, it is preferable to carry out the first step under the condition that the drawing temperature is 75-80°C and the draw ratio is about 4.6-4.8 and to carry out the second step under the condition that the drawing temperature is 80-85°C and the draw ratio is about 1.10-1.15. It is preferable to carry out the drawing treatment in two-stage because of a stable process.

In the case where a series of aforementioned processes is employed, the objective polyester fibers having the double refraction (Δn) of 0.170 or more and the heat shrinkage stress (200°C) of 0.10-0.60 g/d can smoothly be obtained by adjusting the condition of the heat treatment process (stretching heat treatment and/or relaxing heat treatment) which is the final process.

When the nonwoven fabric used for producing the support member for the semipermeable membrane is prepared by using the aforementioned fibers mainly composed of polyester, the nonwoven fabric is prepared by using the fibers mainly composed of polyester in combination with a heat-weldable binder fiber in order to obtain a nonwoven fabric having excellent surface smoothness and mechanical property by making strong and satisfactory bonds between the fibers of the nonwoven fabric, and in order to make the preparation method of the nonwoven fabric easy.

Any of the thermoplastic fibers may be used as a binder fiber insofar as it softens at lower temperature than the softening temperature of the fibers mainly composed of polyester and it can form the nonwoven fabric having the mean breaking length (at elongation of 5 %) of 4.0 km or more and the air permeability of 0.2-5.0 cc/cm²· s. The binder fibers are not particularly restricted, and, for example, heat-weldable polyester fibers, heat-weldable polyamide fibers, heat-weldable polyolefin fibers and the like can be used. Among others heat-weldable polyester fibers are preferably used as a binder fiber from the viewpoint of affinity with the fibers mainly composed of polyester, performance of the obtained nonwoven fabric as the support member for the semipermeable membrane.

As the heat-weldable polyester binder fibers, unstretched polyester fibers, low-melting polyester fibers, and the conjugate fibers composed of low-melting polyester and ordinary polyester (e.g., core/sheath type, side-by-side type, sea/island type and the like), which are prepared in such a way that the low-melting polyester exists on at least a part of the fiber surfaces, are exemplified. The heat-weldable polyester binder fibers may be used independently or may be used as a mixture of two or more of said fibers.

As the low-melting polyester fiber or low-melting polyester, the polyester fiber or polyester having a low melting point which is prepared by copolymerization, melt mixing and the like, for example, can be used.

Furthermore, a heat-weldable polyester binder fiber having the double refraction (Δn) of 0.05 of less and a specific gravity of 1.335-1.360 is preferably used as the binder fiber because said polyester binder fiber exhibits an excellent adhesion between the fibers.

The ratio of the fiber mainly composed of polyester: the heat-weldable binder fiber when the nonwoven fabric is manufactured is adjusted to 70:30-30:70 (weight ratio), preferably 65:35-45:55 (weight ratio)

When the proportion of the fiber mainly composed of polyester is less than 30 % by weight based on the total weight of the fiber mainly composed of polyester and the heat-weldable binder fiber, it is difficult to obtain the nonwoven fabric having the mean breaking length (at elongation of 5 %) of 4.0 km or more and the air permeability of 0.2-5.0 cc/cm²·s. On the other hand, when said proportion exceeds 70 % by weight, a hairiness and a decrease of dimensional stability of the nonwoven fabric and the like are easy to occur because of poor adhesion between the fibers which constitute the nonwoven fabric.

At the time of making the nonwoven fabric for producing the support member for the semipermeable membrane, although the nonwoven fabric can be made by dry process or wet process wherein the fiber mainly composed of polyester and the heat-weldable binder fiber are used in the weight ratio of 70:30-30:70 as described above, the wet process for making a paper is preferably used. In the case of the wet process for making a paper, an aqueous slurry is prepared wherein the fiber mainly composed of polyester and the heat-weldable binder fiber are homogeneously mixed and dispersed in an aqueous medium, and then said aqueous slurry is preferably subjected to a conventional wet process for making a paper. Although a concentration of solid contents in the aqueous slurry is particularly unrestricted and may be the same extent of the concentration of solid contents in an aqueous slurry used in the conventional wet process for making a paper, an aqueous slurry whose final concentration of solid contents is about 0.01-0.5 % by weight is preferably employed in a general way.

At the time of preparing the aqueous slurry, one or more of the additives, such as hydrophilizing agent, dispersing agent, anti-foaming agent, antistatic agent, mold release agent, water repellant agent, anti-fungus agent, germicide and the like may be added to the paper material in order to, for example, increase a dispersibility of the fiber mainly composed of polyester, the heat-weldable binder fiber and the like and to increase a performance of the nonwoven fabric obtained.

In addition, a small amount of other components other than the aforementioned components, for example, other polymer fibers, polymer binders and the like may be used as occasion demands insofar as they do not disturb the object of the present invention.

The aqueous slurry prepared as described above is then subjected to the wet process for making a paper. The process and the apparatus for making the nonwoven fabric are particularly unrestricted. Any processes and apparatuses may be used that have hitherto been employed for the wet process for making a paper. For example, said wet process can be carried out by means of one or two or more of a paper machine equipped with a Fourdrinier paper machine, a paper machine equipped with an inclined wire machine, a paper machine equipped with a cylinder paper machine and the like. In the case where a couching is carried out by means of two or more of the paper machines, a paper web wherein a cloudiness is more decreased is obtained.

The objective nonwoven fabric for producing the support member for the semipermeable membrane is manufactured by subjecting the paper web obtained as described above to a heating treatment under pressure in a state of monolayer or in a state of laminated web prepared by laminating plural sheets of said paper web or by laminating said paper web and other fiber web to melt the heat-weldable binder fiber and to unite the fibers in a body.

An alternative method which is different from the aforesaid method may be employed. In other words, the nonwoven fabric for producing the support member for the semipermeable membrane is manufactured by subjecting the monolayered paper web prepared as described above to the heating treatment under pressure to melt the heat-weldable binder fiber and to unite the fibers, and laminating the monolayered paper web prepared as described above which is not subjected to the heating treatment under pressure or other fibrous web onto the heat-treated monolayered paper web, and then subjecting the obtained laminated web to the heating treatment under pressure as occasion demands.

In the case where the laminate composed of plural sheets of the paper web is subjected to the heating treatment under pressure, an integrated nonwoven fabric having an increased uniformity can be obtained by using the same kind of webs or a nonwoven fabric having different physical properties, such as density and the like in the direction of thickness can be obtained by using a different kind of webs. Therefore, the kinds of webs may suitably be selected in accordance with the uses, kinds and the like of the semipermeable membrane.

In the case where the nonwoven fabric is manufactured by subjecting the laminate composed of plural sheets of the paper web to the heating treatment under pressure, it is possible to employ a web prepared by using the fibers having the double refraction (Δn) of less than 0.170 and/or the heat shrinkage stress (200°C) of a value which is deviated from the range of 0.10-0.60 g/d as a part of the laminate as occasion demands

Although the temperature and pressure employed at the time of heat-treating the laminate under pressure when the nonwoven fabric is manufactured can be adjustable in accordance with a kind of the paper web, a laminating method, a desired performance of the support member composed of the nonwoven fabric for the semipermeable membrane and the like, the temperature of 150-260°C, preferably 200-240°C, and the linear pressure of 50-150 kg/cm, preferably 80-120 kg/cm are employed, as a general rule.

A kind and the like of a heating press used in the heating treatment under pressure are unrestricted in particular, and the heating presses which are heretofore employed for various purposes can be used. For example, a calendering equipment composed of a pair of heating metallic rolls, a calendering equipment composed of a heating metallic roll and an elastic roll and the like can be employed. Furthermore, a preheating device and/or a cooling device may be arranged before and behind the heating press

In the case where, for example, the calendering equipment composed of the heating roll and the elastic roll is employed, it is preferable to carry out the heating treatment under pressure by double calendering of two sides from the viewpoints of a prevention of hairiness appeared in two sides of the nonwoven fabric and an evenness of a smoothness of two sides. In such a case, the temperature and the pressure employed in the second heating treatment under pressure may be same as or different from those employed in the first heating treatment under pressure.

The support member for the semipermeable membrane according to the present invention is obtained by the aforementioned methods, said support member being composed of the nonwoven fabric having the mean breaking length (at elongation of 5 %) of 4.0 km or more and the air permeability of 0:2-5.0 cc/cm²·s. The support member for the semipermeable membrane has a higher elasticity modulus and superior dimensional stability in comparison with the former support member for the semipermeable membrane. Furthermore, the support member for the semipermeable membrane according to the present invention has more micropores and superior surface smoothness in comparison with the former support member for the semipermeable membrane under the condition that the air permeabilities of the both support members are adjusted to the same value. Therefore, the support member for the semipermeable membrane according to the present invention has various excellent physical properties, such as those described below:
(i) peeling and breaking of the semipermeable membrane do not occur because of excellent adhesion of the support member to the semipermeable membrane formed on said support member;
(ii) dimensional change of the support member as well as peeling breaking of the semipermeable membrane do not occur when the support member is employed in high-pressure filtration;
(iii) the semipermeable membrane is supported by the support member even if a filtering rate is high;
(iv) even and smooth semipermeable membrane having no irregularity can be formed on the support member; and
(v) the semipermeable membrane having no pinhole can be formed on the support member as a strike-through of the film-forming solution do not occur.

The support member for the semipermeable membrane having the aforesaid excellent physical properties according to the present invention can very effectively be used as a support member for various devices equipped with the semipermeable membrane, for example, the filters for treating liquid, such as a filter for preparing ultrapure water, a filter for turning salt water into fresh water, an industrial or a domestic filter for purifying waste water, a filter for purifying blood, a filter for concentrating liquid food and the like, the filters for treating gas, such as those employed in a device for enriching oxygen and the like.

If circumstances require, it is possible to employ the support member as a prefilter without using the semipermeable membrane by arranging said support member before a device equipped with the semipermeable membrane.

In the case where a semipermeable membrane having a support member is prepared by forming the semipermeable film on the support member for the semipermeable membrane according to the present invention, any of the methods that are formerly known as a process for preparing the semipermeable membrane on the porous support members, such as a nonwoven fabric and the like can be employed. Therefore, the process for preparing the semipermeable membrane having the support member according to the present invention is not in any way restricted. In addition, kinds of the polymers for film formation which is used for a formation of the semipermeable membrane, kinds and ingredients of the film-forming solution, an application method of the film-forming solution on the support member, a formation method of a film from the film-forming solution applied on the support member, and the like are not in any way restricted. Although a process for preparing the semipermeable membrane according to the present invention which comprises a semipermeable film and the support member composed of the aforementioned nonwoven fabric is not in any way restricted, said semipermeable membrane can be obtained by, for example, applying the film-forming solution wherein a polymer is dissolved or dispersed on the support member for the semipermeable membrane according to the present invention with an application method, such as a casting method and the like, and then subjecting the applied film-forming solution to a solidifying and drying treatment to form a semipermeable polymeric film on the support member.

### Examples

Although the present invention will concretely be explained by the following examples and the like, the present invention is not in any way restricted by said examples. In the following examples and the like, and intrinsic viscosity of polyester, a double refraction (Δn) and a heat shrinkage stress (200°C) of polyester fiber, a mean breaking length (at elongation of 5 %) of the nonwoven fabric (the support member for the semipermeable membrane), air permeability, surface smoothness and pore size are determined as described below. In the following examples and the like, "%" means "% by weight" unless otherwise mentioned.

### Intrinsic viscosity [η] of the polyester

The solution of polyester was prepared by dissolving the polyester chip in o-chlorophenol in such a way that the concentration of the polyester becomes 0.5 %. A relative viscosity (concentration: 0.5 %) and a specific viscosity of the solution were measured in the thermostatic chamber (30°C) by means of Ubbelohde 's viscometer. An intrinsic viscosity (unit: dl/g) of polyester was determined by an extrapolatory conversion from the previously drawn graph which represents the relationship between the specific viscosity and the concentration.

### Double refraction (Δn) of the polyester fiber

The double refraction (unitless) of polyester fiber was measured in α-bromonaphthalene by means of the polarization microscope using sodium light source under the condition that Berek compensator was inserted into the light path of the polarization microscope and that the temperature and the relative humidity were set to 20°C and 65% respectively.

### Heat shrinkage stress (200°C) of the polyester fiber

Single fibers were sampled from the polyester tow before cutting thereof in such a way that a fiber bundle of 13.9 g/km (125 denier) was obtained. This fiber bundle of 125 denier was hung on the upper and lower hooks (space: about 5 cm) of the equipment for measuring the heat shrinkage stress ("KE-II type" manufactured by Kanebo Engineering Co.), and then the fiber bundle was tied to make the fiber bundle of 27.8 g/km (250 denier). The heat shrinkage stress of the fiber (unit: g/denier) at 200°C was measured by increasing the temperature of the fiber bundle of 250 denier at a rate of temperature rise of 300°C/120 seconds until the fiber bundle reaches a melt cutting under the condition that the initial load of 15 g was applied to the fiber bundle of 250 denier.

### Mean breaking length (at elongation of 5 %) of the nonwoven fabric (the support member for the semipermeable membrane)

The test piece (15 mm long and 200 mm broad) was cut from the nonwoven fabric obtained in each of the following examples and the like. The longitudinal and transverse tensile strengths of the test piece were measured according to JIS P 8113 (1976), and the breaking length was determined from the tensile strength corresponding to its elongation of 5 %. A mean value of the longitudinal and transverse breaking lengths [(longitudinal 5 % breaking length + transverse 5 % breaking length)/2] was determined, said mean value being defined as the mean breaking length (at elongation of 5 %) (unit: km) of the nonwoven fabric. The mean breaking length (at elongation of 5 %) is an index of the dimensional stability of the nonwoven fabric. The more said value is high, the more said dimensional stability is high.

### Air permeability of the nonwoven fabric (the support member for the semipermeable membrane)

The test piece (200 mm long and 300 mm broad) was cut from the nonwoven fabric obtained in each of the following examples and the like. According to JIS L 1079 (1966), the air permeability (unit: cc/cm²·s) of the test piece was measured by means of Flazier type tester.

### Surface smoothness of the nonwoven fabric (the support member for the semipermeable membrane)

According to JIS P 8119 (1976), the surface smoothness (unit: second) of the nonwoven fabric obtained in each of the following examples and the like by means of Bekk tester.

### Pore size of the nonwoven fabric (the support member for the semipermeable membrane)

The pore size (maximum pore diameter) (unit: µm) of the nonwoven fabric obtained in each of the following examples and the like was measured according to "Explanation" (pages 7-10) appended in JIS K 3832 (1990) "Precision filter membrane element and a treating method of bubble point of module". The magnitude of the pore size (maximum pore diameter) of the nonwoven fabric is an index which indicates whether numbers of the fine pores are many or not when the air permeability is at the same level.

### (Examples 1-5 and Comparative examples 1-3)

(1) Polyethylene terephthalate (PET) chips (intrinsic viscosity: 0.64 dl/g) were melted at 300°C and discharged at 285°C through the spinning nozzle having circular holes of 600, and then the discharged PET was taken off at the take-off speed of 565 m/min to prepare the unstretched yarns (fineness of single fiber: 1.01 g/km (9.1 denier)).
(2) The unstretched yarns obtained in the above (1) were bundled under tension to prepare the tow of 72222 g/km (650000 denier). The tow was drawn in the warm water bath (temperature: 75-85'C) by two-step process at the draw ratios as described in the following table 1, and the stretched tow was subjected to the stretch heat treatment and other relaxation heat treatment under the conditions as described in the following table 1 to prepare the stretched polyester fibers (mean fineness of single fiber: 1.8-2.1) having the double refraction (Δn) and the heat shrinkage stress (200°C) as described in the following table 1. The stretched polyester fibers were cut in length of 10 mm to obtain the stretched PET short fibers having no crimps. The aforesaid relaxation heat treatment was carried out by subjecting the stretched polyester fibers, which was subjected.to the stretch heat treatment (heating roller process) at a fixed temperature, to a hot-air drying treatment in a free state for about 30 minutes.
(3) Sixty parts by weight of the stretched PET short fiber obtained in the aforesaid (2) and 40 parts by weight of the unstretched PET short fiber [double refraction (Δn): 0.012; fineness of single fiber: 0.12 g/km (1.1 denier); fiber length: 5 mm; specific gravity: 1.340; circular section; no crimps] were charged into the pulper, and mixed and dispersed sufficiently in the water to prepare the aqueous slurry whose fiber concentration is 0.05 %. The aqueous slurry was transferred to cylinder paper machine to make a paper. The paper dried by means of Yankee drier (120°C) and wound up to prepare the paper web (basis weight: 72 g/m²).
(4) The paper web obtained in the aforesaid (3) was passed through the heat calender processing equipment composed of the metallic roll and the cotton roll in such a way that the back side (the side which was not contacted with the Yankee drier at the time of making paper) was contacted with the metallic roll under the following conditions, and then the calendered paper web was passed through said equipment in such a way that the right side was contacted with the metallic roll under the same conditions to prepare the nonwoven fabric made of PET whose both sides were calendered: the fixed temperature of the metallic roll: 230°C; linear pressure: 80 kg/cm; processing speed: 10 m/min. The basis weight of the nonwoven fabric obtained was 72-74 g/m².
(5) The mean breaking length (at elongation of 5 %) and the air permeability of the nonwoven fabric obtained in the aforesaid (4) were measured according to the aforementioned methods, and the results obtained are shown in the following table 1.

**Table 1**

| | Polyester fibers | | | | Physical properties of nonwoven fabrics | |
|---|---|---|---|---|---|---|
| | Draw ratio (times) | Temperature of heat treatment (°C) stretch/ relaxation | Double refraction (Δn) | Heat shrinkage stress (200°C) (g/d) | Mean breaking length (at elongation of 5%) (km) | Air permeability (cc/cm²·s) |
| Ex. 1 | 5.0 | 140/120 | 0.175 | 0.10 | 4.3 | 1.0 |
| EX. 2 | 5.0 | 160/120 | 0.181 | 0.12 | 4.9 | 1.3 |
| Ex. 3 | 5.0 | 200/70 | 0.196 | 0.27 | 5.7 | 1.7 |
| Ex. 4 | 5.0 | 180/70 | 0.192 | 0.40 | 6.1 | 2.2 |
| Ex. 5 | 5.2 | 180/70 | 0.198 | 0.55 | 6.3 | 2.8 |
| Com. Ex. 1 | 4.5 | 180/70 | 0.176 | 0.08 | 3.4 | 0.1 |
| Com. Ex. 2 | 4.1 | 180/120 | 0.155 | 0.12 | 3.6 | 0.2 |
| Com. Ex. 3 | 5.3 | 200/70 | 0.201 | 0.66 | 1) | |

| | | | | | | |
|---|---|---|---|---|---|---|
| 1) Cutting of the edges of the web occurred frequently at the time of calender processing, and the nonwoven fabric which can be wound was not prepared. | | | | | | |

As can be seen from the results of the table 1, the performances of the nonwoven fabrics composed of the synthetic fibers are different from those of the papers composed of natural wood pulp, and change greatly depending on the conditions of the heat treatment at the time of preparing the fibers, and the objective nonwoven fabrics for producing the support member for the semipermeable membrane are smoothly obtained by employing the polyester fibers having the specific double refraction (Δn) and heat shrinkage stress (200°C), particularly the polyester fibers having the double refraction (Δn) of 0.170 of more and the heat shrinkage stress (200°C) of 0.10-0.60 g/d, said nonwoven fabrics having the mean breaking length (at elongatin of 5 %) and the air permeability of 0.2-5.0 cc/cm²·s.

### (Examples 6-10)

(1) The PET chips having the intrinsic viscosity of 0.64 dl/g were melted at 300°C, and then the same procedure as described in (1) of example 1 was carried out to prepare the unstretched yarns (fineness of single fiber: 1.98 g/km (17.8 denier)).
(2) The unstretched yarns obtained in the above (1) were bundled under tension to prepare the tow of 72222 g/km (650000 denier). According to the same manner as described in (2) of example 1, the tow was drawn in the warm water bath (temperature: 75-85°C) by two-step process at the draw ratios as described in the following table 2, and the stretched tow was subjected to the stretch heat treatment and the relaxation heat treatment under the conditions as described in the following table 2 to prepare the stretched polyester fibers (mean fineness of single fiber: 3.8-4.2) having the double refraction (Δn) and the heat shrinkage stress (200°C) as described in the following table 2. The stretched polyester fibers were cut in length of 10 mm to obtain the stretched PET short fibers having no crimps.
(3) Fifty-five parts by weight of the stretched PET short fibers obtained in the aforesaid (2) and 45 parts by weight of the same unstretched PET short fibers as used in (3) of example 1 were charged into the pulper, and the same procedure as described in (3) of example 1 was carried out to make the paper web (hereinafter referred to as "paper web A") (basis weight: 51 g/m²).
(4) Apart from the aforesaid (1), the same procedure as described in the aforesaid (1) was carried out to prepare the unstretched polyester yarns (mean fineness of single fibers: 0.69 g/km (6.2 denier)), and said unstretched polyester yarns were bundled under tension to prepare the tow of 72222 g/km (650000 denier). Said tow was drawn in the warm water bath (temperature: 75-85°C) by two-step process at the draw ratios as described in the following table 2, and stretched tow was subjected to the stretch heat treatment and the relaxation heat treatment under the conditions as described in the following table 2 to prepare the stretched polyester fibers (mean fineness of single fiber: 1.2-1.4) having the double refraction (Δn) and the heat shrinkage stress (200°C) as described in the following table 2. The stretched polyester fibers were cut in length of 5 mm to obtain the stretched PET short fibers having no crimps.
(5) Fifty-five parts by weight of the stretched PET short fibers obtained in the aforesaid (4) and 45 parts by weight of the same unstretched PET short fibers as used in (3) of example 1 were charged into the pulper, and the same procedure as described in (3) of example 1 was carried out to make the paper web (hereinafter referred to as "paper web B") (basis weight: 51 g/m²).
(6) The paper web A obtained in the aforesaid (3) and the paper web B obtained in the aforesaid (5) were laminated one by one, and then the right and back sides of the laminated webs were heat-processed by means of the heat calender processing equipment composed of the metallic roll/the cotton roll according to the same manner as described in (4) of example 1 to prepare the nonwoven fabric (basis weight: 102-104 g/m²).
(7) The mean breaking length (at elongation of 5 %) and the air permeability of the nonwoven fabric obtained in the aforesaid (6) were measured according to the aforementioned methods. The results obtained are shown in the following table 2.

**Table 2**

| | Ex. 6 | Ex. 7 | Ex. 8 | Ex. 9 | Ex. 10 |
|---|---|---|---|---|---|
| [Paper web A] | | | | | |
| Fibers mainly composed of PET | | | | | |
| Draw ratio (times) | 5.1 | 5.1 | 5.2 | 5.2 | 5.3 |
| Temperature of heat treatment (°C) | | | | | |
| Stretch treatment | 160 | 180 | 180 | 200 | 200 |
| Relaxation treatment | 120 | 70 | 120 | 70 | 70 |
| Double refraction (Δn) | 0.180 | 0.194 | 0.184 | 0.198 | 0.205 |
| Heat shrinkage stress (g/d) ¹⁾ | 0.13 | 0.32 | 0.26 | 0.44 | 0.56 |
| [Paper web B] | | | | | |
| Fibers mainly composed of PET | | | | | |
| Draw ratio (times) | 5.0 | 5.0 | 5.0 | 5.1 | 4.5 |
| Temperature of heat treatment (°C) | | | | | |
| Stretch treatment | 160 | 180 | 180 | 200 | 180 |
| Relaxation treatment | 120 | 70 | 120 | 70 | 120 |
| Double refraction (Δn) | 0.181 | 0.192 | 0.188 | 0.202 | 0.166 |
| Heat shrinkage stress (g/d) ¹⁾ | 0.17 | 0.25 | 0.35 | 0.57 | 0.08 |
| [Physical properties of the laminated nonwoven fabric] | | | | | |
| Mean breaking length (km) ²⁾ | 5.6 | 7.4 | 6.5 | 7.6 | 4.3 |
| Air permeability (cc/cm²·s) | 2.3 | 3.4 | 2.5 | 4.1 | 2.8 |

| | | | | | |
|---|---|---|---|---|---|
| 1) Heat shrinkage stress (200°C) 2) Mean breaking length (at elongation of 5%) | | | | | |

In the case where the nonwoven fabric is prepared by heating the laminated paper webs under pressure, the following fact can be found from the results shown in the above table 2. That is to say, the objective nonwoven fabric having the mean breaking length (at elongation of 5 %) of 4.0 km or the more and the air permeability of 0.2-5.0 cc/cm²·s for producing the support member for the semipermeable membrane can smoothly be obtained even if at least one layer of the paper web made of the polyester fibers having the double refraction (Δn) of 0.170 or more and the heat shrinkage stress (200°C) of 0.10-0.60 g/d was used in combination with the paper web made of the polyester fibers not having the double refraction (Δn) of 0.170 or more and the heat shrinkage stress (200°C) of 0.10-0.60 g/d (example 10) as in the cases where the nonwoven fabrics were prepared by heating the laminated paper webs made of the polyester fibers having the double refraction (Δn) of 0.170 or more and the heat shrinkage stress (200°C) of 0.10-0.60 g/d under pressure (example 6-9).

### (Example 11)

(1) By changing the discharging amounts of the molten polymer in the spinning process, the unstretched yarns were prepared by carrying out the same procedure as described in (1) of example 1. The unstretched yarns were bundled under tension to prepare the tow of 72222 g/km (650000 denier). According to the same manner as described in (2) of example 1, the tow was drawn in the warm water bath (temperature: 75-85°C) by two-step process at the draw ratios as described in the following table 3, and the stretched tows were subjected to the stretch heat treatment and the relaxation heat treatment under the conditions as described in the following table 3 to prepare the stretched polyester fibers having the double refraction (Δn), the heat shrinkage stress (200°C) and the fineness of single fiber as described in the following table 3. The stretched polyester fibers were cut in length of 10 mm to obtain the stretched PET short fibers having no crimps.
(2) Sixty parts by weight of the stretched PET short fibers obtained in the aforesaid (1) and 40 parts by weight of the same unstretched PET short fibers as used in (3) of example 1 were charged into the pulper, and the same procedure as described in (3) of example 1 was carried out to make the paper web. The right and back sides of the paper web were heat-processed by means of the heat calender processing equipment composed of the metallic roll/the cotton roll according to the same manner as described in (4) of example 1 to prepare the nonwoven fabric (basis weight: 82-83 g/m²).
(3) The mean breaking length (at elongation of 5 %) and the air permeability of the nonwoven fabric obtained in the aforesaid (2) were measured according to the aforementioned methods. The results obtained are shown in the following table 3.

**Table 3**

| Number of Experiment | Polyester fibers | | | | | Physical properties of nonwoven fabrics | |
|---|---|---|---|---|---|---|---|
| | Draw ratio (times) | Temperature of heat treatment (°C) stretch/relaxation | Fineness of single fiber (denier)¹⁾ | Double refraction (Δn) | Heat shrinkage stress (200°C) (g/d) | Mean breaking length (at elongation of 5%) (km) | Air permeability (cc/cm²·s) |
| 1¹⁾ | 5.0 | 180/70 | 0.3 | 0.203 | 0.58 | 7.1 | 0.11 |
| 2 | 5.0 | 180/70 | 1.3 | 0.196 | 0.44 | 6.2 | 0.6 |
| 3 | 5.0 | 180/70 | 2.0 | 0.192 | 0.40 | 6.1 | 2.2 |
| 4 | 5.0 | 180/70 | 4.1 | 0.188 | 0.35 | 5.2 | 3.7 |
| 5 | 5.0 | 200/70 | 6.0 | 0.184 | 0.31 | 5.5 | 4.9 |
| 6²⁾ | 5.0 | 200/70 | 7.9 | 0.177 | 0.24 | 5.3 | 8.1 |
| 7²⁾ | 5.0 | 200/70 | 8.6 | 0.171 | 0.34 | 4.3 | 10.6 |

| | | | | | | | |
|---|---|---|---|---|---|---|---|
| 1) 1 denier = 0.111 g/km 2) not within the claims | | | | | | | |

From the results shown in table 3, the following fact can be found. That is to say, it is preferable to use the polyester fibers having the double refraction (Δn) of 0.170 or more, the heat shrinkage stress (200°C) of 0.10-0.60 g/d and the fineness of single fiber of 1.0-8.0 denier in order to obtain the nonwoven fabric having the mean breaking length (at elongation of 5 %) and air permeability of 0.2-10.0 cc/cm²·s. If the fineness of single fiber of the polyester fiber is less than 1.0 denier, the air permeability of the nonwoven fabric is apt to decrease to less than 0.2 cc/cm²·s. On the other hand, the fineness of single fiber of the polyester fiber exceeds 8.0 denier, the air permeability of the nonwoven fabric is apt to exceed 10.0 cc/cm²·s.

### (Examples 12-14 and Comparative examples 4 and 5)

(1) The polyethylene naphthalate (PEN) chips having the intrinsic viscosity of 0.62 dl/g were melted at 305°C and discharged at 288°C through the spinning nozzle having circular holes of 600, and then the discharged PEN was taken off at the take-off speed of 565 m/min to prepare the unstretched yarns (fineness of single fiber: 1.02 g/km (9.2 denier)).
(2) The unstretched yarns obtained in the above (1) were bundled under tension to prepare the tow of 72222 g/km (650000 denier). The tow was drawn in the warm water bath (temperature: 75-85°C) by two-step process at the draw ratios as described in the following table 4, and the stretched tow was subjected to the stretch heat treatment and the relaxation heat treatment under the conditions as described in the following table 4 to prepare the stretched polyester fibers (mean fineness of single fiber: 1.9-2.2) having the double refraction (Δn) and the heat shrinkage stress (200°C) shown in the following table 4. The stretched polyester fibers were cut in length of 5 mm to obtain the stretched PEN short fibers having no crimps
(3) Fifty parts by weight of the stretched PEN short fiber obtained in the aforesaid (2) and 50 parts by weight of the unstretched PET short fiber [double refraction (Δn): 0.016; fineness of single fiber: 0.11 g/km (1.0 denier); fiber length: 5 mm; specific gravity: 1.342; circular section; no crimps] were charged into the pulper, and mixed and dispersed sufficiently in the water to prepare the aqueous slurry whose fiber concentration is 0.05 %. The aqueous slurry was transferred to the paper machine equipped with a cylinder paper machine net to make a paper. The paper was dried by means of Yankee drier (120°C) and wound up to prepare the paper web (basis web: 88 g/m²).
(4) The right and back sides of the paper web obtained in the above (3) were heat-processed by means of the heat calender processing equipment according to the same manner as described in (4) of example 1 to obtain the nonwoven fabric mainly composed of PEN fiber (basis weight: 90-91 g/m²).
(5) The mean breaking length (at elongation of 5 %) and the air permeability of the nonwoven fabric obtained in the aforesaid (4) were measured according to the aforementioned methods. The results obtained are shown in the following table 4.

**Table 4**

| | Polyester fibers | | | | Physical properties of nonwoven fabrics | |
|---|---|---|---|---|---|---|
| | Draw ratio (times) | Temperature of heat treatment (°C) stretch/ relaxation | Double refraction (Δn) | Heat shrinkage stress (200°C) (g/d) | Mean breaking length (at elongation of 5%) (km) | Air permeability (cc/cm²·s) |
| Ex. 12 | 5.2 | 180/120 | 0.185 | 0.15 | 6.1 | 1.2 |
| EX. 13 | 5.2 | 180/70 | 0.194 | 0.43 | 6.5 | 1.5 |
| Ex. 14 | 5.2 | 200/70 | 0.192 | 0.44 | 7.6 | 1.4 |
| Com. Ex. 4 | 4.5 | 180/120 | 0.166 | 0.06 | 3.2 | 0.06 |
| Com. Ex. 5 | 5.4 | 200/70 | 0.204 | 0.71 | 1) | |

| | | | | | | |
|---|---|---|---|---|---|---|
| 1) Cutting of the edges of the web occurred frequently at the time of calender processing, and the nonwoven fabric which can be wound was not prepared. | | | | | | |

As can be seen from the results shown in the above table 4, the same results in the case of PET fiber were obtained when PEN fiber is a main fiber which constitutes the nonwoven fabric.

### (Comparative examples 6 and 7)

(1) Twenty-five parts by weight of PET fiber (fineness of single fiber: 0.67 g/km (6.0 denier); fiber length: 10 mm) having the double refraction (Δn) of 0.166 and the heat shrinkage stress (200°C) of 0.06 g/d, 30 parts by weight of PET fiber (fineness of single fiber: 0.17 g/km (1.5 denier); fiber length: 5 mm) having the double refraction (Δn) of 0.162 and the heat shrinkage stress (200°C) of 0.05 g/d and 45 parts by weight of the same unstretched polyester short fiber as used in (3) of example 1 were charged into the pulper, and mixed and dispersed sufficiently in the water to prepare the aqueous slurry whose fiber concentration is 0.06 %. The aqueous slurry was transferred to the paper machine equipped with a cylinder paper machine to make a paper. The paper was dried by means of Yankee drier (120°C) and wound up to prepare the paper web (basis weight: 49 g/m²).
(2) Two paper webs obtained in the aforesaid (1) were laminated, and the laminated paper web was passed through the heat calender processing equipment composed of the metallic roll/the cotton roll in such a way that one side of the laminated paper web was subjected to the treatment of thermal contact bonding under the conditions that the temperature of the metallic roll, the linear pressure and the processing speed were set to 230°C, 80 kg/cm and 10 m/min respectively, and then the laminated paper web was turned over and its another side was subjected to the treatment of thermal contact bonding under the same conditions (comparative example 6) or said another side was subjected to the treatment of thermal contact bonding under the conditions that the temperature of-the metallic roll, the linear pressure and the processing speed were set to 240°C, 150 kg/cm and 10 m/min respectively (comparative example 7) to obtain the nonwoven fabric having the basis weight of 102 g/m² (Comparative example 6) or 104 g/m² (comparative example 7).
(3) The mean breaking length (at elongation of 5 %), the air permeability, the smoothness of the right and back sides and the pore size of the nonwoven fabric obtained in the above (2) were measured according to the aforementioned methods. The results obtained are shown in the following table 5.
(4) For the comparison, the mean breaking length (at elongation of 5 %), the air permeability, the smoothness of the right and back sides and the pore size of the nonwoven fabrics obtained in the aforesaid examples 6 and 8 were also measured according to the aforementioned methods. The results obtained are shown in the following table 5.

As regards the measurements of the surface smoothness shown in the following table 5, the right side means the surface which was firstly subjected to the heat calender processing treatment (the surface which was firstly contacted with the metallic roll), and the back side means the surface which was secondly subjected to the heat calender processing treatment (the surface which was secondly contacted with the metallic roll).

**Table 5**

| | Basis weight (g/m²) | Air permeability (cc/cm²·s) | Mean breaking length (at elongation of 5%) (km) | Surface smoothness | | Pore size (µm) |
|---|---|---|---|---|---|---|
| | | | | the right side (second) | the back side (second) | |
| Ex. 6 | 104 | 2.3 | 5.6 | 22 | 18 | 42 |
| Ex. 7 | 103 | 2.5 | 6.5 | 18 | 24 | 39 |
| Com. Ex. 6 | 102 | 2.6 | 3.7 | 9.6 | 8.6 | 66 |
| Com. Ex. 7 | 10.4 | 2.1 | 3.5 | 9.5 | 10.2 | 65 |

Heretofore, there is a reverse correlation between the air permeability and the surface smoothness of the nonwoven fabric. When the density of the nonwoven fabric is decreased in order to increase the air permeability, its surface smoothness is decreased. On the other hand, when the processing conditions at the time of heat calender processing are severe or the fibers having small fineness are employed in order to increase the surface smoothness, the air permeability is decreased. These facts are general drawbacks. However, as can be seen from the results shown in the above table 5, the nonwoven fabric having high air permeability as well as high surface smoothness can be supplied according to the present invention.

In addition, as can be seen from the results shown in the above table 5, the pore size (maximum pore diameter) is small and the air permeability is increased because of an existence of many fine pores in the case of the nonwoven fabric according to the present invention.

## Claims

1. A support member for a semipermeable membrane,
said support member being composed of nonwoven fabric comprising 30-70 % by weight of a polyester fiber having a double refraction (Δn) of 0.170 or more, a heat shrinkage stress at 200°C of 0.10-0.60 g/d and a mean single fiber fineness of 0.11-0.72 g/km (1.0-6.5 denier), and 70-30% by weight of a heat weldable binder fiber; and
said nonwoven fabric constituting the support member having a mean value of the breaking lengths at elongation of 5 % in a lengthwise direction (MD) and a crosswise direction (CD) of 4.0 km or more and an air permeability of 0.2-5.0 cc/cm²·s.

2. The support member according to claim 1, wherein the polyester fiber is poly(alkylene arylate) mainly composed of a diol unit selected from an ethylene glycol unit and/or a 1,4-butanediol unit and a dicarboxylic acid unit selected from a terephthalic acid unit and/or a naphthalenedicarboxylic acid unit, wherein the poly(alkylene arylate) may have 20 mole% or less of a structural unit derived from other copolymerizable components insofar as they satisfy the afore-mentioned physical properties.

3. A process for preparing a support member for a semipermeable membrane as defined in claim 1 or 2, which process comprises the steps of:
(i) forming a monolayered paper web comprising a polyester fiber having a double refraction (Δn) of 0.170 or more, a heat shrinkage stress at 200°C of 0.10-0.60 g/d and a mean single fiber fineness of 0.11-0.72 g/km (1.0-6.5 denier) together with a heat weldable binder fiber in a weight ratio of 70:30-30:70, and
(ii) subjecting the monolayered paper web to a heat treatment under pressure to bind the fibers to each other.

4. The process according to claim 3, which further comprises
(iii) laminating a second monolayered paper web or other fibrous web on the heat-treated onolayered paper web, and then
(iv) subjecting the laminated webs to a heat treatment under pressure to bind the webs together.

5. A process for preparing a support member for a semipermeable membrane as defined in claims 1 and 2, which process comprises the steps of:
(i) forming a monolayered paper web comprising a polyester fiber having a double refraction (Δn) of 0.170 or more, a heat shrinkage stress at 200°C of 0.10-0.60 g/d and a mean single fiber fineness of 0.11-0.72 g/km (1.0-6.5 denier) together with a heat weldable binder fiber in a weight ratio of 70:30-30:70,
(ii) laminating a second monolayered paper web or other fibrous web on the monolayered paper web, and then
(iii) subjecting the laminated web to a heat treatment under pressure to bind the webs together.

6. The process according to any of claims 3 to 5, wherein the heat weldable binder fiber is a polyester fiber.

7. A semipermeable membrane comprising a semipermeable film formed on a side of the support member according to claims 1 or 2.

## Patentansprüche

1. Trägerelement für eine semipermeable Membran,
wobei das Trägerelement aus einem Vlies, umfassend 30 bis 70 Gew.-% einer Polyesterfaser mit einer Doppelbrechung (Δn) von 0,170 oder mehr, einer Wärmeschrumpfspannung bei 200°C von 0,10 bis 0,60 g/d und einer durchschnittlichen Feinheit der einzelnen Faser von 0,11 bis 0,72 g/km (1,0 bis 6,5 Denier), und 70 bis 30 Gew.-% einer wärmeschweißbaren Bindemittelfaser, zusammengesetzt ist; und
wobei das Vlies, welches das Trägerelement bildet, einen Durchschnittswert der Reißlängen bei Dehnung von 5% in einer Längsrichtung (MD) und einer Querrichtung (CD) von 4,0 km oder mehr und eine Luftdurchlässigkeit von 0,2 bis 5,0 cm³/cm²·s aufweist.

2. Trägerelement gemäß Anspruch 1, wobei die Polyesterfaser Poly(alkylenarylat) ist, hauptsächlich zusammengesetzt aus einer Dioleinheit, ausgewählt aus einer Ethylenglycoleinheit und/oder einer 1,4-Butandioleinheit, und einer Dicarbonsäureeinheit, ausgewählt aus einer Terephthalsäureeinheit und/oder einer Naphthalindicarbonsäureeinheit, wobei das Poly(alkylenarylat) 20 Mol-% oder weniger einer Struktureinheit, abgeleitet von anderen copolymerisierbaren Bestandteilen, insofern, als dass sie die vorstehenden physikalischen Eigenschaften erfüllen, aufweisen kann.

3. Verfahren zur Herstellung eines Trägerelements für eine semipermeable Membran wie in Anspruch 1 oder 2 definiert, wobei das Verfahren die Schritte umfasst:
(i) Herstellen eines einschichtigen Papiergewebes, umfassend eine Polyesterfaser mit einer Doppelbrechung (Δn) von 0,170 oder mehr, einer Wärmeschrumpfspannung bei 200°C von 0,10 bis 0,60 g/d und einer durchschnittlichen Feinheit der einzelnen Faser von 0,11 bis 0,72 g/km (1,0 bis 6,5 Denier), zusammen mit einer wärmeschweißbaren Bindemittelfaser in einem Gewichtsverhältnis von 70:30 bis 30:70, und
(ii) Unterziehen des einschichtigen Papiergewebes einer Wärmebehandlung unter Druck, um die Fasern aneinander zu binden.

4. Verfahren gemäß Anspruch 3, welches ferner umfasst
(iii) Laminieren eines zweiten einschichtigen Papiergewebes oder eines anderen Fasergewebes auf das wärmebehandelte, einschichtige Papiergewebe, und anschließend
(iv) Unterziehen der laminierten Gewebe einer Wärmebehandlung unter Druck, um die Gewebe zusammenzubinden.

5. Verfahren zur Herstellung eines Trägerelements für eine semipermeable Membran wie in den Ansprüchen 1 und 2 definiert, wobei das Verfahren die Schritte umfasst:
(i) Herstellen eines einschichtigen Papiergewebes, umfassend eine Polyesterfaser mit einer Doppelbrechung (Δn) von 0,170 oder mehr, einer Wärmeschrumpfspannung bei 200°C von 0,10 bis 0,60 g/d und einer durchschnittlichen Feinheit der einzelnen Faser von 0,11 bis 0,72 g/km (1,0 bis 6,5 Denier), zusammen mit einer wärmeschweißbaren Bindemittelfaser in einem Gewichtsverhältnis von 70:30 bis 30:70,
(ii) Laminieren eines zweiten einschichtigen Papiergewebes oder eines anderen Fasergewebes auf das einschichtige Papiergewebe, und anschließend
(iii) Unterziehen des laminierten Gewebes einer Wärmebehandlung unter Druck, um die Gewebe zusammenzubinden.

6. Verfahren gemäß einem der Ansprüche 3 bis 5, wobei die wärmeschweißbare Bindemittelfaser eine Polyesterfaser ist.

7. Semipermeable Membran, umfassend eine semipermeable Folie, welche auf einer Seite des Trägerelements gemäß den Ansprüchen 1 oder 2 hergestellt ist.

## Revendications

1. Elément support pour une membrane semi-perméable,
ledit élément support étant composé d'une étoffe non tissée comprenant 30 à 70 % en poids d'une fibre de polyester ayant une réfraction double (Δn) de 0,170 ou plus, une contrainte de retrait thermique à 200 °C de 0,10 à 0,60 g/d et une finesse moyenne de fibre unique de 0,11 à 0,72 g/km (1,0 à 6,5 deniers), et 70 à 30 % en poids d'une fibre liante thermosoudable ; et
ladite étoffe non tissée constituant l'élément support ayant une valeur moyenne des longueurs de rupture à un allongement de 5 % dans un sens de la longueur (MD) et un sens transversal (CD) de 4,0 km ou plus et une perméabilité à l'air de 0,2 à 5,0 cm³/cm²·s.

2. Elément support selon la revendication 1, dans lequel la fibre de polyester est poly(arylate d'alkylène) principalement composé d'un motif diol choisi parmi un motif éthylèneglycol et/ou un motif 1,4-butanediol et d'un motif acide dicarboxylique choisi parmi un motif acide téréphtalique et/ou un motif acide naphtalène-dicarboxylique, dans lequel le poly(arylate d'alkylène) peut avoir 20 % en moles ou moins d'un motif structural issu d'autres constituants copolymérisables dans la mesure où ils satisfont aux propriétés physiques susmentionnées.

3. Procédé pour préparer un élément support pour une membrane semi-perméable tel que défini dans la revendication 1 ou 2, lequel procédé comprend les étapes consistant :
(i) à former un voile de papier monocouche comprenant une fibre de polyester ayant une réfraction double (Δn) de 0,170 ou plus, une contrainte de retrait thermique à 200 °C de 0,10 à 0,60 g/d et une finesse moyenne de fibre unique de 0,11 à 0,72 g/km (1,0 à 6,5 deniers), conjointement avec une fibre liante thermosoudable en un rapport pondéral de 70:30 à 30:70, et
(ii) à soumettre le voile de papier monocouche à un traitement thermique sous pression pour lier les fibres entre elles.

4. Procédé selon la revendication 3, qui comprend en outre
(iii) la stratification d'un second voile de papier monocouche ou un autre voile fibreux, sur le voile de papier monocouche traité par de la chaleur, et puis
(iv) la soumission des voiles stratifiés à un traitement thermique sous pression pour lier les voiles ensemble.

5. Procédé pour préparer un élément support pour une membrane semi-perméable tel que défini dans les revendications 1 et 2, lequel procédé comprend les étapes consistant :
(i) à former un voile de papier monocouche comprenant une fibre de polyester ayant une réfraction double (Δn) de 0,170 ou plus, une contrainte de retrait thermique à 200 °C de 0,10 à 0,60 g/d et une finesse moyenne de fibre unique de 0,11 à 0,72 g/km (1,0 à 6,5 deniers), conjointement avec une fibre liante thermosoudable en un rapport pondéral de 70:30 à 30:70,
(ii) à stratifier un second voile de papier monocouche ou un autre voile fibreux sur le voile de papier monocouche, et puis
(iii) à soumettre le voile stratifié à un traitement thermique sous pression pour lier les voiles ensemble.

6. Procédé selon l'une quelconque des revendications 3 à 5, dans lequel la fibre liante thermosoudable est une fibre de polyester.

7. Membrane semi-perméable comprenant un film semi-perméable formé sur un côté de l' élément support selon les revendications 1 ou 2.
